# EUROPEAN PATENT APPLICATION

(11) **EP 4 668 833 A1**
(43) Date of publication of application: **24.12.2025**
(21) Application number: 23921928.0
(22) Date of filing: 16.02.2023
(51) Int. Cl.: H04W 24/10

(54) **MEASUREMENT REPORTING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Dehns Germany Partnerschaft mbB
(86) International application number: PCT/CN2023/076635
(87) International publication number: WO 2024/168774

(57) **Abstract**

Embodiments of the present disclosure provide a measurement reporting method and apparatus, a communication device, and a storage medium. The measurement reporting method comprises: when a trigger condition for measurement reporting is satisfied, a user equipment (UE) determines, according to a measurement report, whether to report the measurement report to a network device. The measurement reporting method comprises: when a measurement event associated with a measurement identifier is a first measurement event, a UE ignores a neighbor cell list configuration corresponding to the measurement identifier, wherein the first measurement event is different from a second measurement event for a neighbor cell.

## Description

### TECHNICAL FIELD

The present disclosure relates to the technical field of wireless communication but is not limited to the technical field of wireless communication, and in particular, to a measurement reporting method and apparatus, a communication device, and a storage medium.

### BACKGROUND

Unmanned aerial vehicles (UAVs) have become increasingly popular in recent years. Global interest in UAV-based services has increased dramatically, including a variety of UAV operations, personal entertainment through flying experiences, cargo delivery, etc. As the basis for these services, remote control and data transmission capabilities are key aspects to enhance, which is of interest to service providers/operators and UAV manufacturers.

According to relevant research, the feasibility of UAV connecting through terrestrial cellular systems and the required enhancement have been verified, and the Long Term Evolution (LTE) system has made corresponding enhancements in uplink interference mitigation, downlink interference mitigation and mobility.

Since the UAV has line-of-sight connection with many base stations, it may cause strong interference to neighbouring cells or be interfered by neighbouring cells. In LTE UAV, a UE-based solution is supported, and the UE can estimate the interference to other cells by performing downlink measurements on neighbouring cells. If there is reciprocity between uplink and downlink, then estimation based on measurements is a good method without delay because the UE is performing measurements anyway.

Additionally, other measurements aimed at reducing UE interference have been enhanced in LTE UAV, for example, by adding height-based measurement reporting to help base stations handle potential interference associated with UAVs.

### SUMMARY

Embodiments of the present disclosure provide a measurement reporting method and apparatus, a communication device, and a storage medium.

A first aspect of the embodiments of the present disclosure provides a measurement reporting method, the method including:
when a trigger condition for measurement reporting is met, determining, by a user equipment (UE), whether to report a measurement report to a network device according to the measurement report.

A second aspect of the embodiments the present disclosure provides a measurement reporting method, the method including:
when a measurement event associated with a measurement identifier is a first measurement event, ignoring, by a user equipment (UE), a neighbouring cell list configuration corresponding to the measurement identifier; where the first measurement event is different from a second measurement event for a neighbouring cell.

A third aspect of the embodiments of the present disclosure provides a measurement reporting apparatus, the apparatus including:
a processing module, configured to, when a trigger condition for measurement reporting is met, determine whether to report a measurement report to a network device by a user equipment (UE) according to the measurement report.

A fourth aspect of the embodiments of the present disclosure provides a measurement reporting apparatus, the apparatus including:
a processing module, configured to, when a measurement event associated with a measurement identifier is a first measurement event, ignoring a neighbouring cell list configuration corresponding to the measurement identifier by a user equipment (UE); where the first measurement event is different from a second measurement event for a neighbouring cell.

A fifth aspect of the embodiments of the present disclosure provides a communication device, including a processor, a memory, and an executable program stored in the memory and capable of being run by the processor, where the processor executes the measurement reporting method provided in the first aspect or the second aspect when running the executable program.

A sixth aspect of the embodiments of the present disclosure provides a computer storage medium, where the computer storage medium stores an executable program; after the executable program is executed by a processor, the measurement reporting method provided in the above first aspect or the above second aspect can be implemented.

In the technical solutions provided by the embodiments of the present disclosure, when the trigger condition for measurement reporting is met, the UE determines whether to report a measurement report to the network device according to the measurement report. In this way, since the UE does not directly perform the measurement reporting when the trigger condition for measurement reporting is met, the number of reporting of frequently triggered measurement reports can be reduced, and unnecessary measurement reporting can be reduced.

In the technical solutions provided by the embodiments of the present disclosure, when the measurement event associated with the measurement identifier is the first measurement event, the UE ignores the neighbouring cell list configuration corresponding to the measurement identifier. Since the first measurement event is different from the second measurement event for the neighbouring cell, it means that the first measurement event does not involve neighbouring cell measurement, by ignoring the neighbouring cell list configuration corresponding to the measurement identifier associated with the first measurement event, the effective execution of the measurement procedure can be guaranteed and the occurrence of measurement failure can be reduced.

It should be understood that the foregoing general description and the following detailed description are exemplary and explanatory only and are not restrictive of the embodiments of the present disclosure.

### BRIEF DESCRIPTION OF THE DRAWINGS

The accompanying drawings herein are incorporated in and constitute a part of the specification, illustrate the embodiments consistent with the present disclosure, and together with the specification, serve to explain the principles of the embodiments of the present disclosure.
FIG. 1 is a schematic structural diagram of a wireless communication system according to an exemplary embodiment;
FIG. 2 is a schematic diagram of a flowchart of a measurement reporting method according to an exemplary embodiment;
FIG. 3 is a schematic diagram of a flowchart of a measurement reporting method according to an exemplary embodiment;
FIG. 4 is a schematic diagram of a flowchart of a measurement reporting method according to an exemplary embodiment;
FIG. 5 is a schematic diagram of a flowchart of a measurement reporting method according to an exemplary embodiment;
FIG. 6 is a schematic diagram of a flowchart of a measurement reporting method according to an exemplary embodiment;
FIG. 7 is a schematic structural diagram of a measurement reporting apparatus according to an exemplary embodiment;
FIG. 8 is a schematic structural diagram of a measurement reporting apparatus according to an exemplary embodiment;
FIG. 9 is a schematic structural diagram of a UE according to an exemplary embodiment.

### DETAILED DESCRIPTION

Exemplary embodiments will now be described in detail, examples of which are shown in the accompanying drawings. Otherwise indicated, the same numbers in different figures represent the same or similar elements. The implementations described in the following exemplary embodiments do not represent all implementations consistent with the embodiments of the present disclosure. Instead, they are only examples of apparatuses and methods consistent with some aspects of the embodiments of the present disclosure.

The terms used in the embodiments of the present disclosure are only for the purpose of describing specific embodiments, and are not intended to limit the embodiments of the present disclosure. The singular forms of "a/an", "said", and "the" used in the present disclosure are also intended to include plural forms, unless the context clearly indicates other meanings. It should also be understood that the term "and/or" used in the present disclosure refers to and includes any or all possible combinations of one or more associated listed items.

It should be understood that although the terms first, second, third, etc. may be used to describe various information in the embodiments of the present disclosure, such information should not be limited to these terms. These terms are only used to distinguish the same type of information from each other. For example, without departing from the scope of the embodiments of the present disclosure, the first parameter may also be referred to as the second parameter, and similarly, the second parameter may also be referred to as the first parameter. Depending on the context, the word "if" as used herein may be interpreted as "at the time of" or "when" or "in response to determining".

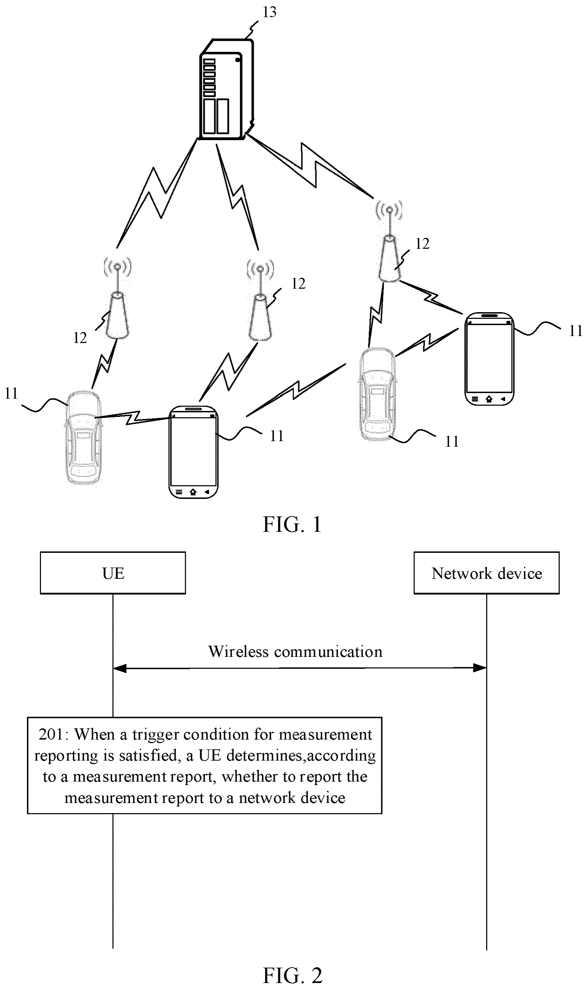

Referring to FIG. 1, which shows a schematic structural diagram of a wireless communication system provided by an embodiment of the present disclosure. As shown in FIG. 1, the wireless communication system is a communication system based on cellular mobile communication technology, and the wireless communication system may include: at least one UE 11 and at least two access network devices 12.

UE 11 may be a device that provides voice and/or data connectivity to users. UE 11 can communicate with one or more core networks via a radio access network (RAN), and through the core network, the UE can be connected to external network devices such as the Internet and other UEs. UE 11 can be an Internet of Things UE, such as a sensor device, a mobile phone (or a "cellular" phone), and a computer with an Internet of Things UE, for example, it may be a fixed, portable, pocket, handheld, computer-built-in or vehicle-mounted apparatus, such as a station (STA), a subscriber unit, a subscriber station, a mobile station, a mobile, a remote station, an access point, a remote UE (remote terminal), an access UE (access terminal), a user apparatus (user terminal), a user agent, a user device, or a user UE (user equipment, UE). Alternatively, UE 11 may also be a device of an unmanned aerial vehicle (UAV). Alternatively, UE 11 may also be a vehicle-mounted device, for example, an electronic control unit with a wireless communication function, or a wireless communication device external to the electronic control unit. Alternatively, UE 11 may also be a roadside device, for example, a street lamp, a signal lamp, or other roadside device with a wireless communication function.

The access network device 12 may be a network side device in a wireless communication system. The wireless communication system may be the 4th generation mobile communication (4G) system, also known as a long term evolution (LTE) system; or, the wireless communication system may be a 5G system, also known as a new radio (NR) system or a 5G NR system. Alternatively, the wireless communication system may be the next generation system of the 5G system. The access network in the 5G system may be called New Generation-Radio Access Network (NG-RAN). Alternatively, it may be a Machine Type Communication (MTC) system.

The access network device 12 may be an evolved access device (eNB) used in the 4G system. Alternatively, the access network device 12 may also be an access device (gNB) using a centralized distributed architecture in the 5G system. When the access network device 12 uses the centralized distributed architecture, it generally includes a central unit (CU) and at least two distributed units (DUs). The protocol stacks of the Packet Data Convergence Protocol (PDCP) layer, the Radio Link Control Protocol (Radio Link Control, RLC) layer, and the Media Access Control (MAC) layer are set in the central unit; and the physical (PHY) layer protocol stack is set in the distributed unit. The specific implementations of the access network device 12 are not limited in the embodiments of the present disclosure.

A wireless connection can be established between the access network device 12 and the UE 11 through a wireless air interface. In different implementations, the wireless air interface is a wireless air interface based on the fourth generation mobile communication network (4G) standard; or, the wireless air interface is a wireless air interface based on the fifth generation mobile communication network (5G) standard, for example, the wireless air interface is a new air interface; or, the wireless air interface may also be a wireless air interface based on the next generation mobile communication network standard of 5G.

End to End (E2E) or device to device (D2D) connection can be also established between UEs 11, such as vehicle to vehicle (V2V) communication, vehicle to Infrastructure (V2I) communication and vehicle to pedestrian (V2P) communication in vehicle to everything (V2X) communication.

The access network device 12 may be located in a communication system integrated with a satellite communication system, and may provide connection services for satellites, and may connect satellites to a core network. For example, the access network device 12 may be an access network device having a satellite gateway function in the communication system, such as a gateway device, a ground station device, a non-terrestrial network gateway/satellite gateway (Non-terrestrial networks Gateway, NTN-Gateway), etc.

The above wireless communication system may further include a core network device 13. A plurality of access network devices 12 are connected to the core network device 13 respectively.

Exemplarily, the core network device 13 may be a Mobility Management Entity (MME) in an Evolved Packet Core (EPC). Alternatively, the core network device may also be an Enhanced Serving Mobile Location Centre (E-SMLC) or the like.

As another example, the core network device 13 may be an access and mobility management function (AMF), a location management function (LMF), a gateway mobile location center (GMLC), etc. The embodiments of the present disclosure do not limit the implementation form of the core network device 13.

It should be noted that the network architecture shown in FIG. 1 is only an example applicable to the embodiments of the present disclosure and does not constitute a limitation on the scope of application of the embodiments of the present disclosure.

In order to facilitate the understanding of those skilled in the art, the embodiments of the present disclosure list multiple implementations to clearly illustrate the technical solutions of the embodiments of the present disclosure. Those skilled in the art can understand that the multiple embodiments provided by the embodiments of the present disclosure can be executed separately, or can be executed together with the methods of other embodiments in the embodiments of the present disclosure, or can be executed together with some methods in other related art separately or in combination; which are not limited by the embodiments of the present disclosure.

In a mobile communication system, in order to support the mobility of UE and obtain the channel status of the cell currently around the UE in a timely manner, the network configures the UE to perform Radio Resource Management (RRM) measurement. Idle-state UE and inactive-state UE can autonomously select or reselect cells based on the RRM measurement results. Connected-state UE reports the RRM measurement result to the network to assist the network in making handover decisions. During the measurement procedure of the connected-state UE, the network can send measurement configuration information to the connected-state UE through Radio Resource Control (RRC) signaling, and the UE performs intra-frequency, inter-frequency and/or inter-system measurements, and then report the measurement results to the network. The measurement can be divided into three aspects: measurement configuration, measurement execution and measurement reporting.

The network performs measurement configuration using an RRC reconfiguration procedure, and the measurement configuration information includes at least one of the following: a measurement object, a reporting configuration, a measurement identifier, a measurement start threshold, a measurement gap, a measurement gap allocation and other information.

Each set of measurements is associated and configured in an indexed manner, with the total index being the measurement identifier. All measurements are arranged in full accordance with the association relationship of the measurement identifiers and are delivered to the UE by the network side. Each measurement identifier is simultaneously connected to one measurement object identifier and one reporting configuration identifier, indicating the combination of the measurement object that needs to be measured and the reporting configuration. The measurement object and reporting configuration that are not connected to the measurement identifier can also be delivered to the UE, but the UE will not perform any form of measurement on these configurations. It should be noted that each measurement identifier can only be associated with one measurement object identifier and one reporting configuration identifier.

The UE performs measurements according to the measurement configuration delivered by the network, and reports criteria evaluation after obtaining the cell measurement result. The measurement reporting can be divided into event-triggered reporting and periodic reporting according to the reporting evaluation criteria. The reporting evaluation criteria are determined by the reporting configuration sent by the network to the UE.

Regarding the event-triggered reporting, the RRM event (Event) supported in the NR system may include events A1/A2/A3/A4/A5/A6 in the same system and events B1/B2 in inter-RAT (Radio Access Technology).

Event A1: The serving cell measurement result is greater than a threshold.

Event A2: The serving cell measurement result is less than the threshold.

Event A3: The neighbouring cell measurement result is better than the SpCell (Special Cell), where the SpCell may be a PCell (Primary Cell) or a PSCell (Primary Secondary cell).

Event A4: The neighbouring cell measurement result is greater than the threshold.

Event A5: The measurement result of the SpCell (which may be PCell or PSCell) is less than threshold 1, and the neighbouring cell measurement result is greater than threshold 2.

Event A6: The neighbouring cell measurement result is better than the measurement result of a certain secondary cell (SCell).

Event B1: The neighbouring cell measurement result of inter-RAT is greater than the threshold.

Event B2: The primary cell (PCell) measurement result is less than the threshold 1, and the neighbouring cell measurement result in the inter-RAT is greater than the threshold 2.

The event-triggered reporting may include: event-triggered one-time reporting and event-triggered periodic reporting.

For the event-triggered one-time reporting, the UE may trigger the sending of a measurement report only when a measurement event entry threshold configured by the network is met and lasts for a period of time, and the process ends after the measurement report is sent once.

For the event-triggered periodic reporting, the UE may trigger the sending of the measurement report only when the measurement event entry threshold configured by the network is met and lasts for a period of time, and after the reporting is triggered, the timer between multiple measurements and the counter of the number of measurements may be started until the number of reporting reaches the requirement and the process ends.

For the periodic reporting, after the measurement configuration of the network is completed, the UE may measure the corresponding frequency points according to the configuration content and send the measurement report according to the specified reporting period and interval. If the trigger type is "periodic", when the maximum number of reporting is reached, the UE may autonomously delete the corresponding measurement identifier in the measurement configuration variable.

In addition to the above two types of measurement reporting, one-time measurement trigger reporting is introduced for some special use cases, including one-time measurement trigger reporting introduced to support the Automatic Neighbor Relations (ANR) function, which is used to trigger the UE to obtain relevant information about a specific cell (including the cell global identifier, the tracking area code (TAC), the Public Land Mobile Network (PLMN) list to which the cell belongs, and other information) and trigger one-time measurement reporting.

If the reporting condition is met, the UE may trigger the measurement report reporting. The content of the measurement report includes at least one of the following:
a measurement identifier;
all available serving cell measurement results;
the best neighbouring cell measurement result on individual serving frequency points optionally carried according to the reporting configuration;
a neighbouring cell measurement result meeting the trigger condition.

Since aerial UEs such as UAVs have line-of-sight connections with many base stations, they may cause strong interference to neighbouring cells or be interfered with by neighbouring cells. Interference detection can be performed in the base station or estimated by the UE. In base station-based detection, the base station should negotiate with the neighbouring cell(s) and collect interference from the neighbouring cell(s) in order to know that the aerial UE has begun to interfere with multiple cells. Although this method is more accurate, it requires poor real-time performance, high latency, and requires signaling interaction between the base stations. Therefore, in LTE UAV, a UE-based solution is supported, and the UE can estimate the interference to other cells by performing downlink measurements on the neighbouring cells. If there is reciprocity between uplink and downlink, then estimation based on measurements is a good method without latency because the UE is performing measurements anyway.

Since the aerial UE may cause interference to multiple neighbouring cells, the frequency of measurement reporting may increase. Therefore, in LTE UAV, to address the problem of frequent triggering of measurement reports, it is proposed that the measurement report will not be sent when one Cell meets the event, but will be sent after the configured number of Cells meet the event. This can reduce the number of triggering the measurement report.

In the LTE UAV process, the requirement of the number of cells that meet the trigger condition based on the network configuration (i.e., greater than one) is introduced to trigger the measurement reporting. However, in the corresponding reporting process, the measurement reporting is triggered only when the number of cells that meet the trigger condition changes from not greater than the configured number to greater than or equal to the configured number. Even if the number of cells that meet the trigger condition is greater than the configured number later, the UE will not trigger the measurement reporting.

However, a large number of measurement reporting are triggered when the leaving condition is met. Reducing the frequency of measurement reporting requires not only reducing the measurement reports triggered by meeting the measurement event, but also requires considering the number of measurement reporting triggered by meeting the leaving condition. There are several solutions to solve this problem:
scheme *a*: when the number of cells that meet the leaving condition is greater than a certain number, measurement reporting is triggered;
scheme *b*: the UE triggers measurement reporting only when the previously reported cell meets the leaving condition;
scheme c: when the total number of cells that meet the condition is less than the threshold value, measurement reporting is triggered.

The scheme *a* and the scheme c may make it impossible for the UE to update the measurement results of neighbouring cells in a timely manner, resulting in a delay in the measurement results, which may cause the network to configure an inappropriate target cell for the UE. For example, when a certain neighbouring cell does not meet the threshold value, but the UE does not report the measurement result in time, resulting in the network side being unable to obtain the signal strength of this neighbouring cell in time, it is possible to configure this neighbouring cell as the target cell based on the previously reported measurement result, which may cause a handover failure. The scheme b cannot update high-interference neighbouring cells in a timely manner. If the leaving condition only applies to the cell included in the previous measurement report, it is difficult to continuously notify the interference.

In response to the problem of UE frequently triggering measurement reporting, some solutions cause the UE to be unable to continuously report the interference, which will affect the performance of interference detection. In this way, the UE may be interfered by the cell that has not been reported, but the network side is unaware of it. Some solutions may result in delayed reporting, which may cause the network side to configure incorrect handover commands or fail to update the interference suppression strategy in a timely manner.

For some measurement reporting, such as height-based measurement reporting, the evaluation and measurement reporting do not involve applicable cells. If the UE performs the operation related to the cell list configuration, it may cause measurement anomalies or measurement reporting delays.

FIG. 2 is a flowchart of a measurement reporting method according to an exemplary embodiment. As shown in FIG. 2, the method may include the following steps.

In 201: when a trigger condition for measurement reporting is met, the UE determines whether to report a measurement report to the network device according to the measurement report.

In some examples, the UE may be an aerial UE and/or a mobile device moving on the ground. Here, the aerial UE may be, for example, an unmanned aerial device. In other examples, the aerial UE may also be a UE carried by personnel aboard the aircraft.

In some examples, the UE may be located on the UAV and may be integrated into the UAV, for example, the UE may be capable of providing a data connection for controlling the UAV or communicating with the UAV.

In some examples, the UE may be the payload of the UAV and perform functions separate from the UAV.

The UAV described above may include any type of unmanned aerial vehicle. For example, the UAV may be an unmanned fixed-wing aircraft, an unmanned airship, an unmanned helicopter or any other device capable of flying and being remotely controlled.

In some examples, the UE may perform corresponding measurements and measurement reporting according to the measurement configuration delivered by the network. For example, the measurement may include at least one of the following: a cell measurement, a height measurement, a speed measurement, a position measurement, etc.

The cell measurement is used to measure the serving cell and/or neighbouring cell. The cell measurement may include: intra-frequency cell measurement, inter-frequency cell measurement, or inter-system cell measurement.

The height measurement is used to measure the height information of the UE, such as the height value and/or height offset value of the UE.

The speed measurement is used to measure speed information of the UE, such as the speed and/or a speed change value of the UE. The speed of the UE may include a horizontal speed of the UE, a vertical speed of the UE, or a speed of the UE in any direction.

The position measurement is used to measure the position information of the UE, such as the position and/or position change of the UE. The position of the UE may include at least one of the following: a geographical position, an area identifier.

In the embodiments of the present disclosure, the measurement reporting of the UE is associated with a measurement identifier. The UE may send a measurement report to the network based on the measurement identifier associated with the measurement reporting.

The measurement identifier is used by the network to obtain information from the measurement configuration stored in itself, including but not limited to the measurement object and measurement configuration corresponding to the current reporting, and the like.

In some examples, the measurement reporting of the UE may include at least one of the following:
measurement reporting triggered based on RRM event;
measurement reporting triggered based on height;
measurement reporting triggered based on speed;
measurement reporting triggered based on location.

In some examples, measurement reporting triggered based on height may be triggered by event H1 or event H2.

Event H1 refers to that the height of the UE in the air exceeds a first threshold; event H2 refers to that the height of the UE in the air is lower than a second threshold.

In some examples, the measurement reporting triggered based on speed may be triggered based on the UE speed being greater than the first speed threshold value, and/or the speed being less than the second speed threshold value.

In some examples, the measurement reporting triggered based on location may be triggered by event D1.

Event D1 refers to that the distance between the UE and the first reference position is greater than a first distance threshold, and the distance between the UE and the second reference position is less than a second distance threshold.

In some examples, when the trigger condition of the measurement reporting is related to the measurement result of the neighbouring cell, the measurement reporting is used for the network to configure a cell handover command for the UE, or for the network to update the interference suppression strategy. Here, the interference suppression strategy can be used to suppress the downlink interference of the neighbouring cell to the UE and/or the uplink interference of the neighbouring cell to the UE.

In some examples, the measurement result of the neighbouring cell includes at least one of the following:
a Reference Signal Receiving Power (RSRP) of the neighbouring cell;
a Reference signal received quality (RSRQ) of the neighbouring cell;
a Signal to Interference plus Noise Ratio (SINR) of the neighbouring cell.

In some examples, when the trigger condition of the measurement reporting is related to the measurement result of the neighbouring cell, the measurement reporting may be measurement reporting triggered by event A3, event A4, event A5, event A6, event B1 or event B2.

In some examples, when the trigger condition of the measurement reporting is irrelevant to the cell measurement result, the measurement reporting may be measurement reporting triggered based on height, speed or location. For example, the measurement reporting is measurement reporting triggered based on event H1 or event H2. In this example, the cell measurement result may include: a measurement result of the serving cell and/or the neighbouring cell.

In the embodiments of the present disclosure, the trigger condition for measurement reporting may be: a reporting trigger condition for a measurement event.

In some examples, as long as the UE determines that one cell meets the reporting trigger condition of the measurement event, it may determine whether to report the measurement report to the network device according to the measurement report.

For example, if the measurement event is A3 and the UE has four neighbouring cells, it can determine in sequence whether neighbouring cells 1 to 4 meet the reporting trigger condition. If it is determined that neighbouring cell 1 and neighbouring cell 2 do not meet the reporting trigger condition and neighbouring cell 3 meets the reporting trigger condition, it is unnecessary to continue to determine whether neighbouring cell 4 meets the reporting trigger condition, that is, determine whether to report the measurement report to the network device according to the measurement report.

In other examples, after successively determining whether multiple neighbouring cells meet the reporting trigger condition, and if there is a cell that meets the reporting trigger condition, the UE may determine whether to report the measurement report to the network device according to the measurement report.

In some examples, the measurement report includes: a signal quality value of a neighbouring cell.

In some examples, the signal quality value of the neighbouring cell includes at least one of the following:
a measurement value of the Reference Signal Receiving Power (RSRP) of the neighbouring cell;
a measurement value of the Reference Signal Received Quality (RSRQ) of the neighbouring cell;
a measurement value of the Signal to Interference plus Noise Ratio (SINR) of the neighbouring cell.

In some examples, step 201 may include:
when the trigger condition for measurement reporting is met, the UE determining whether to report the measurement report to the network device according to whether the content of the measurement report is changed.

In this way, since the UE does not directly perform measurement reporting, the frequent triggering of measurement reporting can be reduced; in addition, if the content of the measurement report does not change, the UE does not need to perform the measurement reporting; if the content of the measurement report changes, the UE may perform the measurement reporting. When measurement reporting is used for cell handover, the UE can report the measurement report with changed content to the network in a timely manner, so that the network side can configure a suitable target cell for the UE in time and reduce the occurrence of handover failures. In addition, when measurement reporting is used for interference estimation, the UE can continuously report interference, so that the network side can update the interference suppression strategy in time.

In one embodiment, the method may include the following steps:
when the trigger condition for measurement reporting is related to the measurement result of the neighbouring cell, for the measurement event used to trigger the measurement reporting, determining whether the UE has a configuration of use allowed cell list.

In this embodiment, when the triggering of the measurement reporting of the UE is related to the measurement result of the neighbouring cell, the measurement event used to trigger the measurement reporting may be a measurement event other than event A1, event A2, event D1, event X2, event H1 or event H2.

Here, the above-mentioned measurement event other than the event A1, event A2, event D1, event X2, event H1 or event H2 may be: an event other than any one or more of event A1, event A2, event D1, event X2, event H1 and event H2.

In one embodiment, the method may include the following steps.

For each measurement identifier in the measurement identifier list, if the reporting type in the reporting configuration corresponding to the measurement identifier is set to event trigger, for a measurement event other than event A1, event A2, event D1, event X2, event H1, or event H2, at least one of the following operations is performed:
when the allowed cell addition and modification list defined in the measurement configuration parameter for the measurement identifier includes the concerned cell, determining any neighbouring cell detected based on the parameter in the measurement object related to the measurement identifier as an applicable cell;
when the excluded cell addition and modification list defined in the measurement configuration parameter for the measurement identifier does not include the concerned cell, determining any neighbouring cell detected based on the parameter in the measurement object related to the measurement identifier as the applicable cell.

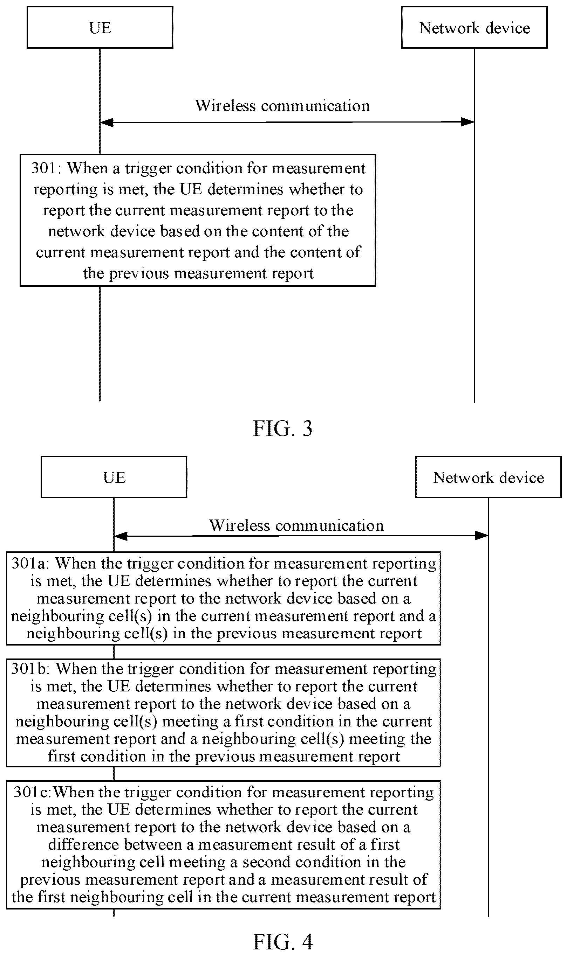

In one embodiment, as shown in FIG. 3, in the above step 201, when the trigger condition for measurement reporting is met, the UE determines whether to report the measurement report to the network device according to the measurement report, which may include the following step.

In 301: when a trigger condition for measurement reporting is met, the UE determines whether to report the current measurement report to the network device based on the content of the current measurement report and the content of the previous measurement report.

In this embodiment, the current measurement report is: a measurement report needing to be sent by the UE to the network device in response to meeting the trigger condition for measurement reporting this time.

The previous measurement report is: the most recent measurement report sent by the UE to the network device. It can be understood that the previous measurement report is a measurement report that has been sent to the network device.

Here, the measurement identifier in the previous measurement report and the measurement identifier in the current measurement report may be the same or different.

In some examples, the previous measurement report is a measurement report sent to the network device by a measurement identifier associated with the most recent measurement reporting of the UE. In this example, the measurement identifier in the previous measurement report is the same as the measurement identifier in the current measurement report.

In some examples, the content of the current measurement report may include: a list of neighbouring cells for which measurement results need to be reported.

In some examples, the content of the previous measurement report may include: a list of neighbouring cells that have most recently reported measurement results.

In some examples, the neighbouring cells that need to report measurement results may include: neighbouring cells that meet the trigger condition.

In some examples, the trigger condition may include: an entry condition of a measurement event, or a leaving condition of a measurement event.

Here, if one neighbouring cell meets the entry condition of the measurement event, this neighbouring cell enters the state of meeting the measurement event from the state of not meeting the measurement event.

Here, if one neighbouring cell meets the leaving condition of the measurement event, the neighbouring cell enters a state of not meeting the measurement event from a state of meeting the measurement event.

In some examples, the above step 301 may include:
when the trigger condition for measurement reporting is met, the UE may determine whether to report the current measurement report to the network device based on whether the content of the current measurement report is changed compared with the content of the previous measurement report.

As an example, when the content of the current measurement report changes compared with the content of the previous measurement report, the UE determines to report the current measurement report to the network device; or, when the content of the current measurement report does not change compared with the content of the previous measurement report, the UE determines not to report the current measurement report to the network device.

As an example, when the content of the current measurement report changes compared with the content of the previous measurement report, the UE executes reporting the current measurement report to the network device; or, when the content of the current measurement report does not change compared with the content of the previous measurement report, the UE does not execute reporting the current measurement report to the network device.

In the embodiments of the present disclosure, when the trigger condition for measurement reporting is met, the UE determines whether to report the current measurement report to the network device based on the content of the current measurement report and the content of the previous measurement report. If the content of the current measurement report has not changed compared with the content of the previous measurement report, the UE does not need to perform the measurement reporting. If the content of the current measurement report has changed compared with the content of the previous measurement report, the UE performs the measurement reporting. In this way, not only can the frequent triggering of the measurement reporting be reduced; but also when the measurement reporting is used for cell handover, the UE can report the measurement report with changed content to the network in a timely manner, so that the network side can configure a suitable target cell for the UE in a timely manner, reducing the occurrence of handover failures; in addition, when the measurement reporting is used for interference estimation, the UE can continuously perform interference reporting, so that the network side can update the interference suppression strategy in a timely manner.

In one embodiment, as shown in FIG. 4, in the above step 301, determining whether to perform the current measurement reporting based on whether the content of the current measurement report has changed compared with the previous measurement report may include: at least one of steps 301a, 301b and 301c.

In 301a: when the trigger condition for measurement reporting is met, the UE determines whether to report the current measurement report to the network device based on a neighbouring cell(s) in the current measurement report and a neighbouring cell(s) in the previous measurement report.

In some examples, the UE may determine whether to report the current measurement report to the network device based on whether the neighbouring cell(s) in the current measurement report has changed compared to the neighbouring cell(s) in the previous measurement report.

For example, the UE can compare the identification information of the neighbouring cell(s) contained in the current measurement report with the identification information of the neighbouring cell(s) contained in the previous measurement report. If they are consistent, the neighbouring cell(s) in the current measurement report has not changed compared with the neighbouring cell(s) in the previous measurement report. If they are inconsistent, the neighbouring cell(s) in the current measurement report has changed compared with the neighbouring cell(s) in the previous measurement report.

In some examples, in the above step 301a, the UE determines whether to report the current measurement report to the network device based on the neighbouring cell(s) in the current measurement report and the neighbouring cell(s) in the previous measurement report, which may include one of the following:
when the neighbouring cell(s) in the current measurement report changes compared with the neighbouring cell(s) in the previous measurement report, the UE determining to report the current measurement report to the network device;
when the neighbouring cell(s) in the current measurement report is not changed compared with the neighbouring cell(s) in the previous measurement report, the UE determining not to report the measurement report to the network device.

In some examples, the neighbouring cell(s) in the current measurement report is changed compared with the neighbouring cell(s) in the previous measurement report, which may include:
compared with the neighbouring cell(s) in the previous measurement report, one of addition, replacement, and missing or a combination of more than one of addition, replacement, and missing occurring in the neighbouring cell(s) in the current measurement report.

As an example, the change is: replacement. For example, if the neighbouring cells included in the previous measurement report include cell A, cell B and cell C, and the neighbouring cells included in the current measurement report include cell A, cell D and cell E, the reporting of the current measurement result is performed.

As an example, the change is: addition. For example, if the neighbouring cells included in the previous measurement report include cell A, cell B and cell C, and the neighbouring cells included in the current measurement report include cell A, cell B, cell C and cell D, then the reporting of the current measurement result is performed.

As an example, the change is: missing. For example, the neighbouring cells included in the previous measurement report include cell A, cell B and cell C, and the neighbouring cells included in the current measurement report include cell A and cell B, then the reporting of the current measurement result is performed.

As an example, the change includes: addition and replacement. For example, the neighbouring cells included in the previous measurement report include cell A, cell B and cell C, and the neighbouring cells included in the current measurement report include cell A, cell B, cell D and cell E, then the reporting of the current measurement result is performed.

As an example, the change includes: missing and replacement. If the neighbouring cells included in the previous measurement report include cell A, cell B and cell C, and the neighbouring cells included in the current measurement report include cell A and cell D, the reporting of the current measurement result is performed.

In 301b: when the trigger condition for measurement reporting is met, the UE determines whether to report the current measurement report to the network device based on a neighbouring cell(s) meeting a first condition in the current measurement report and a neighbouring cell(s) meeting the first condition in the previous measurement report.

In some examples, the neighbouring cell(s) meeting the first condition in the previous measurement report may include:
top N neighbouring cell(s) in a first sorting of the neighbouring cell(s) in the previous measurement report; where N is a positive integer greater than or equal to 1; where the first sorting includes: an order of the signal quality value(s) of the neighbouring cell(s) in the previous measurement report from high to low.

The neighbouring cell(s) meeting the first condition in the current measurement report may include:
top N neighbouring cell(s) in a second sorting of the neighbouring cell(s) in the current measurement report; where the second sorting includes: an order of the signal quality value(s) of the neighbouring cell(s) in the current measurement report from high to low.

In some examples, N may be 1, 2, or 3. This embodiment does not limit the specific value of N.

Here, the signal quality value may be a measurement value of a measurement quantity determined by the UE based on network configuration or protocol agreement or determined autonomously by the UE.

In some examples, the measurement quantity may be: RSRP, RSRQ, or SINR.

As an example, if the neighbouring cell(s) meeting the first condition is determined based on RSRP, the UE may, before performing the current measurement reporting, compare the top N neighbouring cells determined by the second sorting of the RSRP values from high to low in the neighbouring cells included in the current measurement report with the top N neighbouring cells determined by the first sorting of the RSRP values from high to low in the neighbouring cells included in the previous measurement report, to determine whether the neighbouring cell(s) meeting the first condition included in the current measurement report is changed compared with the neighbouring cell(s) meeting the first condition included in the previous measurement report.

In some examples, in the above step 301b, the UE determines whether to report the current measurement report to the network device based on the neighbouring cell(s) meeting the first condition in the current measurement report and the neighbouring cell(s) meeting the first condition in the previous measurement report, which may include:
when the neighbouring cell(s) meeting the first condition in the current measurement report changes compared with the neighbouring cell(s) meeting the first condition in the previous measurement report, the UE determining to report the current measurement report to the network device;
   or,
when the neighbouring cell(s) meeting the first condition in the current measurement report is not changed compared with the neighbouring cell(s) meeting the first condition in the previous measurement report, the UE determining not to report the current measurement report to the network device.

As an example, the neighbouring cells included in the previous measurement report are sorted from high to low according to RSRP values as cell A, cell B and cell C, where N=2, and the neighbouring cells included in the current measurement report are sorted from high to low according to RSRP values as cell A, cell B, cell D, cell C, and cell E, then the current measurement report will not be reported to the network device.

As an example, the neighbouring cells included in the previous measurement report are sorted from high to low according to RSRP values as cell A, cell B, cell C, and cell D, where N=2, and the neighbouring cells included in the current measurement report are sorted from high to low according to RSRP values as cell A, cell D, cell B, cell C, and cell E, then the current measurement report is reported to the network device.

In some examples, the neighbouring cell(s) meeting the first condition in the current measurement report is changed compared with the neighbouring cell(s) meeting the first condition in the previous measurement report, including:
when the top N neighbouring cells in the first sorting are consistent with the top N neighbouring cells in the second sorting, the order of the top N neighbouring cells in the first sorting is changed compared with the order of the top N neighbouring cells in the second sorting.

As an example, the neighbouring cells included in the previous measurement report are sorted according to RSRP values from high to low: cell A, cell B, cell C, cell D, where N=2, and the neighbouring cells included in the current measurement report are sorted according to RSRP from high to low: cell A, cell B, cell C, cell D, cell E, then the current measurement report will not be reported to the network device.

As an example, the neighbouring cells included in the previous measurement report are sorted according to RSRP from high to low as follows: cell A, cell B, cell C, cell D, where N=2, and the neighbouring cells included in the current measurement report are sorted according to RSRP from high to low as follows: cell A, cell D, cell B, cell C, cell E, then the current measurement report is reported to the network device.

As an example, the neighbouring cells included in the previous measurement report are sorted according to RSRP from high to low as follows: cell A, cell B, cell C, cell D, where N=2, and the neighbouring cells included in the current measurement report are sorted according to RSRP from high to low as follows: cell A, cell D, cell B, cell C, cell E, then the current measurement report is reported to the network device.

In 301c: when the trigger condition for measurement reporting is met, the UE determines whether to report the current measurement report to the network device based on a difference between a measurement result of a first neighbouring cell meeting a second condition in the previous measurement report and a measurement result of the first neighbouring cell in the current measurement report.

Here, the UE may determine the first neighbouring cell meeting the second condition based on the signal quality value of the cell in the previous measurement report.

In some examples, the first neighbouring cell meeting the second condition in the previous measurement report is:
the M-th neighbouring cell in the first sorting from high to low of the signal quality values of the neighbouring cells in the previous measurement report; where M is a positive integer greater than or equal to 1.

The signal quality value of the neighbouring cell may be a measurement value of a measurement quantity determined by the UE based on network configuration or protocol agreement or determined autonomously by the UE.

In some examples, the measurement quantity may be: RSRP, RSRQ, or SINR.

In some examples, M may be 1, 2, or 3. This embodiment does not limit the specific value of M.

As an example, if the neighbouring cell meeting the second condition is determined based on the RSRP measurement value, the UE can sort the neighbouring cells contained in the previous measurement report according to the RSRP value from high to low and determine the neighbouring cell with the highest RSRP measurement value as the first neighbouring cell, and determine the RSRP measurement value of this first neighbouring cell contained in the current measurement report, to determine the difference between the two RSRP measurement values of this first neighbouring cell.

As an example, in the above step 301c, the UE determines whether to report the current measurement report to the network device based on the difference between the measurement result of the first neighbouring cell meeting the second condition in the previous measurement report and the measurement result of the first neighbouring cell in the current measurement report, which may include one of the following:
when the signal quality value of the first neighbouring cell in the previous measurement report is less than or equal to the signal quality value of the first neighbouring cell in the current measurement report, determining not to report the current measurement report to the network device;
when the signal quality value of the first neighbouring cell in the previous measurement report is greater than the signal quality value of the first neighbouring cell in the current measurement report, determining to report the current measurement report to the network device;
when a difference between the signal quality value of the first neighbouring cell in the previous measurement report and the signal quality value of the first neighbouring cell in the current measurement report exceeds a preset threshold, determining to report the current measurement report to the network device.

Here, the preset threshold may be determined by network configuration or a protocol agreement or may be determined autonomously by the UE.

In one embodiment, the cell measurement result includes: a signal quality value of a neighbouring cell, and the measurement reporting includes at least one of the following:
measurement reporting triggered by meeting an entry condition of the measurement event;
measurement reporting triggered by meeting a leaving condition of the measurement event.

Here, the measurement event may be event A3, event A4, event A5, event A6, event B1 or event B2.

The entry condition of the measurement event is: a condition that the neighbouring cell enters a state meeting the measurement event from a state not meeting the measurement event.

The leaving condition of the measurement event is: a condition that the neighbouring cell enters a state not meeting the measurement event from a state meeting the measurement event.

In one embodiment, the measurement reporting triggered based on meeting an entry condition of a measurement event is: a first (initial) measurement reporting triggered by meeting an entry condition of a measurement event.

As an example, for periodic reporting triggered based on the entry condition of the measurement event, when performing the first measurement reporting, it is necessary to determine whether to perform the first measurement reporting based on whether the content of the measurement report has changed; when performing measurement reporting after the first measurement reporting, it is unnecessary to determine whether to perform the measurement reporting based on whether the content of the measurement report has changed.

For example, when one or more neighbouring cells meet the entry condition of the measurement event, it is determined whether to perform measurement reporting based on the content of the measurement report. If measurement reporting is not performed this time, the periodic reporting timer corresponding to the measurement event will not be stopped and the reporting counter will not be reset to zero.

In one embodiment, the measurement reporting triggered based on meeting the leaving condition of the measurement event is triggered by the UE when the leaving condition of the measurement event is met based on a leaving reporting indication configured by the network.

The leaving reporting indication is used for the UE to trigger a measurement reporting based on meeting the leaving condition of the measurement event when the leaving condition of the measurement event is met.

In one example, the leaving reporting indication may be sent by the network to the UE via dedicated signaling (e.g., RRC reconfiguration).

For example, when one or more neighbouring cells in the triggering cell list meet the leaving condition of the measurement event, it is determined whether to perform one-time measurement reporting based on whether the content of the measurement report changes.

In one embodiment, determining whether to perform the measurement reporting based on whether the content of the measurement report changes is not applicable to periodic measurement reporting.

For example, when the measurement reporting is triggered due to the timeout of a periodic timer, the measurement reporting is directly executed without determining whether to execute the measurement reporting based on the content of the measurement report.

In one embodiment, the method may further include:
when the measurement event associated with the measurement identifier is a first measurement event, the UE ignoring the neighbouring cell list configuration corresponding to the measurement identifier; where the first measurement event is different from a second measurement event for the neighbouring cell.

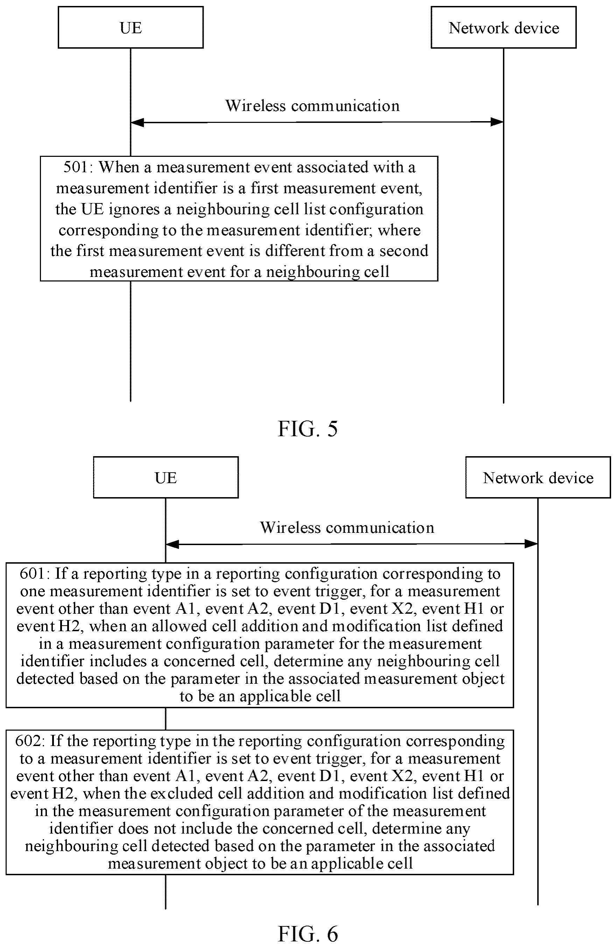

FIG. 5 is a flowchart of a measurement reporting method according to an exemplary embodiment. As shown in FIG. 5, the method may include the following steps.

In 501: when a measurement event associated with a measurement identifier is a first measurement event, the UE ignores a neighbouring cell list configuration corresponding to the measurement identifier; where the first measurement event is different from a second measurement event for the neighbouring cell.

In some examples, the UE may be an aerial UE and/or a mobile device moving on the ground. Here, the aerial UE may be, for example, an unmanned aerial device. In other examples, the aerial UE may also be a UE carried by personnel aboard the aircraft.

In some examples, the UE may be located on the UAV and may be integrated into the UAV, for example, the UE may be capable of providing a data connection for controlling the UAV or communicating with the UAV.

In some examples, the UE may be the payload of the UAV and perform functions separate from the UAV.

The UAV described above may include any type of unmanned aerial vehicle. For example, the UAV may be an unmanned fixed-wing aircraft, an unmanned airship, an unmanned helicopter or any other device capable of flying and being remotely controlled.

In some examples, the first measurement event may include at least one of the following:
a height-based measurement event;
a speed-based measurement event;
a location-based measurement event.

The height-based measurement event can be used to determine whether the height information of the UE meets the trigger condition for measurement reporting. For example, the height information of the UE may include: a height value and/or a height offset value of the UE.

The height-based measurement event can be used to determine whether the UE's speed information meets the trigger condition for measurement reporting.

For example, the speed information of the UE may include: the speed and/or the speed change value of the UE. The speed of the UE may include the horizontal speed of the UE, the vertical speed of the UE, or the speed of the UE in any direction.

The location-based measurement event can be used to determine whether the UE's height information meets the trigger condition for measurement reporting.

For example, the location information of the UE may indicate: the location and/or the amount of location change of the UE. The location of the UE may include at least one of the following: a geographical location, and an area identifier.

In some examples, the height-based measurement event may be: event H1 or event H2.

Event H1 means that the height of the UE in the air exceeds a first threshold; event H2 means that the height of the UE in the air is lower than a second threshold.

In some examples, the speed-based measurement event may be: the speed of the UE is greater than a first speed threshold value, and/or the speed is less than a second speed threshold value.

In some examples, the location-triggered measurement reporting may be triggered by event D1.

Event D1 means that the distance between the UE and the first reference position is greater than a first distance threshold, and the distance between the UE and the second reference position is less than a second distance threshold.

In some examples, the second measurement event for the neighbouring cell may include one or more of event A3, event A4, event A5, event A6, event B1, and event B2.

In some examples, the neighbouring cell list configuration may be used to determine the applicable cell.

In some examples, the UE ignores the neighbouring cell list configuration corresponding to the measurement identifier, which may include that: the UE does not use the neighbouring cell list configuration corresponding to the measurement identifier to determine the applicable cell.

The embodiment of the present disclosure provides a measurement reporting method, when the measurement event associated with the measurement identifier is a first measurement event, the UE ignores the neighbouring cell list configuration corresponding to the measurement identifier. Since the first measurement event is different from the second measurement event with respect to the neighbouring cell, it means that the first measurement event does not involve neighbouring cell measurement. By ignoring the neighbouring cell list configuration corresponding to the measurement identifier associated with the first measurement event, the effective execution of the measurement procedure can be guaranteed and the occurrence of measurement failure can be reduced.

In one embodiment, the neighbouring cell list configuration includes at least one of the following:
a configuration of allowed cell list;
a configuration of excluded cell list.

Here, the configuration of allowed cell list and the configuration of excluded cell list may be included in the configuration of the use allowed cell list (useAllowedCellList) configured by the network.

In one embodiment, the method further includes:
when the measurement event associated with the measurement identifier is the first measurement event, not determining whether the UE has a configuration of the use allowed cell list.

In this way, when the measurement event associated with the measurement identifier is the first measurement event, it means that the first measurement event does not involve cell measurement. Compared with the UE using the cell in the allowed cell list and/or the cell in the excluded cell list based on whether the use allowed cell list is configured, the UE does not perform the judgment on whether the UE has the configuration of the use allowed cell list, which can suppress abnormalities in the measurement procedure and further reduce the occurrence of measurement failures.

In one embodiment, the method may further include:
when the trigger condition for measurement reporting is met, the user equipment (UE) determining whether to report the measurement report to the network device according to the measurement report.

In one embodiment, a measurement reporting method is provided, and the method may include:
for the height-based measurement reporting, the UE ignoring the neighbouring cell list configuration corresponding to the measurement identifier associated with the measurement reporting.

In one embodiment, a measurement reporting method is provided, and the method may include:
for the speed-based measurement reporting, the UE ignoring the neighbouring cell list configuration corresponding to the measurement identifier associated with the measurement reporting.

In one embodiment, a measurement reporting method is provided, and the method may include:
for the location-based measurement reporting, the UE ignoring the neighbouring cell list configuration corresponding to the measurement identifier associated with the measurement reporting.

In one embodiment, a measurement reporting method is provided, and the method may include:
for a measurement event triggered based on height, the UE ignoring the neighbouring cell list configuration corresponding to the measurement identifier associated with the measurement event.

In one embodiment, a measurement reporting method is provided, and the method may include:
for a measurement event triggered based on speed, the UE ignoring the neighbouring cell list configuration corresponding to the measurement identifier associated with the measurement event.

In one embodiment, a measurement reporting method is provided, and the method may include:
for a measurement event triggered based on location, the UE ignoring the neighbouring cell list configuration corresponding to the measurement identifier associated with the measurement event.

In order to further explain any embodiment of the present disclosure, several specific embodiments are provided below.

### First embodiment

The embodiment of the present disclosure provides a measurement reporting method, which can determine whether to trigger the measurement reporting based on the reported content. Under the premise that the trigger condition is met, whether to start the measurement reporting is determined based on whether the list of neighbouring cell(s) that needs to report the measurement result has changed. This can avoid unnecessary measurement reporting and enable the network side to timely learn about the latest neighbouring cell interference and the neighbouring cell(s) that meets the trigger condition.

The measurement reporting method provided in the embodiment of the present disclosure may include:
in response to the UE triggering the measurement reporting procedure, determining whether to perform measurement reporting based on the content of the measurement report.

In an example, measurement reporting is performed only if the neighbouring cell(s) included in the measurement report changes compared to the content of the previous measurement reporting.

In an example, if the top N neighbouring cell(s) with the best signal strength(s) included in the measurement report is changed compared with the content of the previous measurement reporting, measurement reporting is performed.

In an example, if the measurement result of the best neighbouring cell in the previously reported measurement report has a change in amount exceeding a threshold configured by the network compared to the measurement result in the current measurement report, then measurement reporting is performed.

The procedure of UE triggering measurement reporting includes a measurement reporting procedure triggered by the UE meeting an entry condition of a measurement event and/or a measurement reporting procedure triggered by the UE meeting a leaving condition of a measurement event (if the network configures a measurement reporting indication).

In one example, the UE determines the content of the measurement report, and determines whether to perform the current measurement reporting based on the difference between the content of the current measurement report and the content of the previous measurement report.

As an example, the determination of whether to perform the current measurement reporting based on the difference between the content of the current measurement report and the content of the previous measurement report includes:
if the neighbouring cell(s) included in the current measurement report is changed compared with the previous measurement report, performing the current measurement reporting.

For example, if the neighbouring cells included in the previous measurement report are cells A, B, and C, and the neighbouring cells included in the current measurement report are cells A, D, and E, then reporting is performed.

For example, if the neighbouring cells included in the previous measurement report are cells A, B, and C, and the neighbouring cells included in the current measurement report are cells A, B, C, and D, then reporting is performed.

For example, if the neighbouring cells included in the previous measurement report are cells A, B, and C, and the neighbouring cells included in the current measurement report are cells A and B, reporting is performed.

In one example, determining whether to perform the current measurement reporting based on the difference between the content of the current measurement report and the content of the previous measurement report includes:
if N neighbouring cell(s) with the best measurement result(s) included in the current measurement report is changed compared with the previous measurement report, the current measurement reporting is performed, where N is a positive integer greater than or equal to 1.

In this embodiment, the measurement result of the neighbouring cell may include: a signal quality value of the neighbouring cell.

For example, the signal quality value may include a measurement value of RSRP, RSRQ, and/or SINR.

In this embodiment, the N neighbouring cell(s) with the best measurement result(s) refers to the neighbouring cell(s) ranked in the top N according to the measurement values of RSRP, RSRQ or SINR of the neighbouring cells.

For example, the N neighbouring cell(s) with the best measurement result(s) included in the current measurement report is: the neighbouring cell(s) ranked in the top N according to the RSRP measurement values of the neighbouring cells from high to low in the current measurement report.

The N neighbouring cell(s) with the best measurement result(s) included in the previous measurement report is: the neighbouring cell(s) ranked in the top N according to the RSRP measurement values of the neighbouring cells from high to low in the previous measurement report.

The best N neighbouring cell(s) may be determined according to the measurement values of the measurement quantities configured by the network, or the best N neighbouring cell(s) may be determined according to the measurement values of the measurement quantities specified by the protocol or determined based on the UE implementation.

The change in the N neighbouring cell(s) with the best measurement result(s) may mean that: the N neighbouring cell(s) changes, and/or the order of the N neighbouring cells changes.

For example, the neighbouring cells included in the previous measurement report are sorted according to RSRP from high to low as cells A, B, C, and D, where N=2, and the neighbouring cells included in the current measurement report are cells A, B, D, C, and E, then no reporting is performed.

For example, the neighbouring cells included in the previous measurement report are sorted according to RSRP from high to low as cells A, B, C, and D, where N=2, and the neighbouring cells included in the current measurement report are cells A, D, B, C, and E, then reporting is performed.

For example, the neighbouring cells included in the previous measurement report are sorted according to RSRP from high to low as cells A, B, C, and D, where N=2, and the neighbouring cells included in the current measurement report are cells B, A, D, C, and E, then reporting is performed.

In one example, determining whether to perform the current measurement reporting based on the difference between the content of the current measurement report and the content of the previous measurement report includes:
determining the neighbouring cell with the best measurement result in the previous measurement report and the corresponding first measurement result, determining the second measurement result of this neighbouring cell in the current measurement report, and obtaining the difference between the first measurement result and the second measurement result.

In this embodiment, the measurement result of the neighbouring cell may include: a signal quality value of the neighbouring cell.

For example, the signal quality value may be a measurement value of RSRP, RSRQ and/or SINR.

In this embodiment, the neighbouring cell with the best measurement result in the previous measurement report refers to the neighbouring cell ranked at the M-th position according to the measurement values of RSRP, RSRQ or SINR of the neighbouring cells. M may be 1 or 2, etc.

For example, the neighbouring cell with the best measurement result in the previous measurement report is: the neighbouring cell ranked first in the previous measurement report according to the order of the RSRP measurement values of the neighbouring cells from high to low.

For example, if the first measurement result is worse than the second measurement result, no reporting may be performed.

For example, if the first measurement result is better than the second measurement result, reporting is performed.

For example, if the first measurement result is better or worse than the second measurement result by a certain threshold, reporting is performed.

In an example, the determination of whether to perform the current measurement reporting based on the difference between the content of the current measurement report and the content of the previous measurement report is applicable to the first measurement reporting triggered based on an event, but not to periodic measurement reporting.

For example, when one or more neighbouring cells meet the measurement event (entry condition), it is determined whether to trigger the measurement reporting based on the content of the measurement report. If the measurement reporting is not triggered this time, the periodic reporting timer corresponding to this event will not be stopped and the reporting counter will not be reset to zero.

For example, when the measurement report is triggered due to the expiration of the periodic timer, the measurement reporting is directly executed without determining whether to perform the measurement reporting based on the content of the measurement report.

In an example, the determination of whether to perform the current measurement reporting based on the difference between the content of the current measurement report and the content of the previous measurement report is applicable to the measurement reporting triggered based on meeting the leaving condition of the event.

For example, when one or more neighbouring cells in the triggering cell list meet the leaving condition of the measurement event, it is determined whether one-time measurement report needs to be triggered based on the content of the measurement report.

As an example, only when the network configures a leaving reporting indication, the UE may trigger measurement reporting when the leaving condition of the corresponding measurement event is met.

### Second embodiment

The present disclosure provides a measurement reporting method, which may include:

for a measurement identifier associated with event H1 and/or event H2, ignoring a configuration of an allowed cell list and/or a configuration of an excluded cell list corresponding to the measurement identifier.

In one example, for a measurement identifier associated with a measurement event triggered based on height, the configuration of the allowed cell list and/or the configuration of the excluded cell list corresponding to the measurement identifier is ignored.

In one example, for a measurement identifier associated with a measurement event triggered based on height, it is unnecessary to determine whether useAllowedCellList is configured.

In one example, the method may further include at least one of the following:
for a measurement identifier associated with a measurement event triggered based on speed, it is unnecessary to determine whether useAllowedCellList is configured;
for a measurement identifier associated with a measurement event triggered based on location, it is unnecessary to determine whether useAllowedCellList is configured;
for a measurement identifier associated with a measurement event triggered based on location, it is unnecessary to determine whether useAllowedCellList is configured.

In one example, for a measurement identifier associated with a measurement event triggered based on signal strength, it is necessary to determine whether useAllowedCellList is configured.

The measurement event triggered based on signal strength needs to consider the signal strength of the neighbouring cell when evaluating. For example, the measurement event may be: event A3, event A4, event A5, event A6, event B1, event B2 or event X1, etc.

Event X1 means that the measurement value of the application layer 2 (L2) U2N relay (UE-to-Network Relay) UE becomes higher than the threshold.

In one embodiment, as shown in FIG. 6, a measurement reporting method is provided, the method including the following steps:
601: if a reporting type in a reporting configuration corresponding to one measurement identifier is set to event trigger, for a measurement event other than event A1, event A2, event D1, event X2, event H1 or event H2, when an allowed cell addition and modification list defined in a measurement configuration parameter for the measurement identifier includes a concerned cell, determining any neighbouring cell detected based on the parameter in the associated measurement object to be an applicable cell;
   and/or,
602: if the reporting type in the reporting configuration corresponding to a measurement identifier is set to event trigger, for a measurement event other than event A1, event A2, event D1, event X2, event H1 or event H2, when the excluded cell addition and modification list defined in the measurement configuration parameter of the measurement identifier does not include the concerned cell, determining any neighbouring cell detected based on the parameter in the associated measurement object to be an applicable cell.

In this embodiment, for each measurement identifier (measId) in the measurement identifier list (e.g., measIdList) included in the measurement configuration parameter (e.g., VarMeasConfig), if the reporting type (reportType) in the reporting configuration (reportConfig) corresponding to this measurement identifier is set to event trigger (eventtrigger), and the use allowed cell list (useAllowedCellList) is set to true, for a measurement event other than event A1, eventA2, event D1, event X2, event H1, or event H2, at least one of the following operations may be performed:
when the allowed cell addition and modification list (allowedCellsToAddModList) defined in the measurement configuration parameter (e.g., VarMeasConfig) for the measurement identifier includes the concerned cell, it is applicable to any neighbouring cell detected based on the parameter in the associated measurement object (e.g., measObjectNR); when the excluded cell addition and modification list (excludedCellsToAddModList) defined in the measurement configuration parameter (e.g., VarMeasConfig) for the measurement identifier does not include the concerned cell, any neighbouring cell detected based on the parameter in the associated measurement object is determined to be an applicable cell.

The above event X2 refers to that the measurement value of the application layer 2 (L2) U2N relay (UE-to-Network Relay) UE becomes lower than the threshold.

Exemplarily, the measurement event other than event A1, event A2, event D1, event X2, event H1 or event H2 may be an event other than any one or more of event A1, event A2, event D1, event X2, event H1 or event H2.

The measurement event other than the above event A1, event A2, event D1, event X2, event H1 or event H2 may be: an event other than any one or more of event A1, event A2, event D1, event X2, event H1 and event H2.

### Exemplarily:

1> for each measId included in the measIdList within VarMeasConfig:
   2>if the corresponding reportConfig includes a reportType set to eventTriggered or periodical:
      3>if the corresponding measObject concerns NR:
         ......4> if corresponding reportConfig includes reportType set to periodical; or
         4> for measurement events other than eventA1, eventA2, eventD1, eventX2, eventH1 or eventH2:
            5>if useAllowedCellList is set to true:
               6> consider any neighbouring cell detected based on parameters in the associated measObjectNR to be applicable when the concerned cell is included in the allowedCellsToAddModList defined within the VarMeasConfig for this measId;
            5>else:
               6> consider any neighbouring cell detected based on parameters in the associated measObjectNR to be applicable when the concerned cell is not included in the excludedCellsToAddModList defined within the VarMeasConfig for this measId.

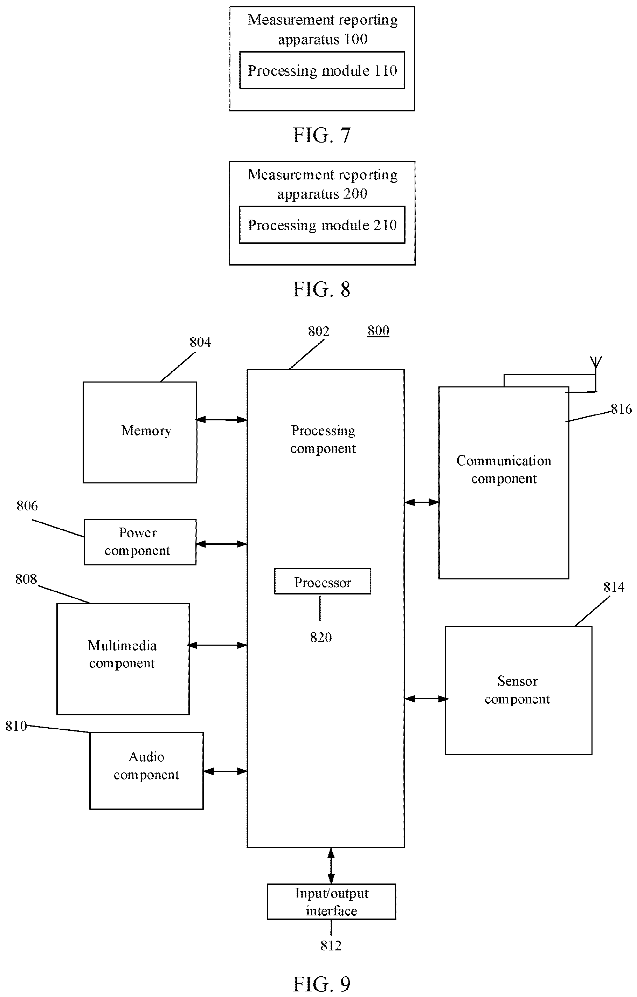

FIG. 7 is a schematic structural diagram of a measurement reporting apparatus according to an exemplary embodiment. The measurement reporting apparatus is applied to a UE. As shown in FIG. 7, the apparatus 100 includes: a processing module 110; and the processing module 110 is configured to:
when a measurement event associated with a measurement identifier is a first measurement event, ignore, by a user equipment (UE), a neighbouring cell list configuration corresponding to the measurement identifier; where the first measurement event is different from a second measurement event for a neighbouring cell.

In one embodiment, the processing module 110 is configured to:
determine, by the UE, whether to report a current measurement report to the network device based on the content of the current measurement report and the content of a previous measurement report.

In one embodiment, the processing module 110 is configured to perform at least one of the following:
determining, by the UE, based on the neighbouring cell(s) in the current measurement report and the neighbouring cell(s) in the previous measurement report, whether to report the current measurement report to the network device;
determining, by the UE, based on the neighbouring cell(s) meeting the first condition in the current measurement report and the neighbouring cell(s) meeting the first condition in the previous measurement report, whether to report the current measurement report to the network device;
determining, by the UE, whether to report the current measurement report to the network device based on a difference between a measurement result of the first neighbouring cell(s) meeting the second condition in the previous measurement report and a measurement result of the first neighbouring cell(s) in the current measurement report.

In one embodiment, the processing module 110 is configured to:
when the neighbouring cell(s) in the current measurement report changes compared with the neighbouring cell(s) in the previous measurement report, determine, by the UE, to report the current measurement report to the network device;
   or,
when the neighbouring cell(s) in the current measurement report is not changed compared with the previous measurement report, determine, by the UE, not to report the current measurement report to the network device.

In one embodiment, the neighbouring cell(s) in the current measurement report is changed compared with the previous measurement report, including:
compared with the neighbouring cell(s) in the previous measurement report, one of addition, replacement, and missing or a combination of more than one of addition, replacement, and missing occurring in the neighbouring cell(s) in the current measurement report.

In one embodiment, the processing module 110 is configured to:
when the neighbouring cell(s) meeting the first condition in the current measurement report changes compared with the neighbouring cell(s) meeting the first condition in the previous measurement report, determine, by the UE, to report the current measurement report to the network device;
   or,
when the neighbouring cell(s) meeting the first condition in the current measurement report is not changed compared with the neighbouring cell(s) meeting the first condition in the previous measurement report, determine, by the UE, not to report the current measurement report to the network device.

In one embodiment, the neighbouring cell(s) meeting the first condition in the previous measurement report includes:
top N neighbouring cell(s) in a first sorting of the neighbouring cell(s) in the previous measurement report; where N is a positive integer greater than or equal to 1; where the first sorting includes: an order of the signal quality value(s) of the neighbouring cell(s) in the previous measurement report from high to low;
the neighbouring cell(s) meeting the first condition in the current measurement report include:
top N neighbouring cell(s) in a second sorting of the neighbouring cell(s) in the current measurement report; where the second sorting includes: an order of the signal quality value(s) of the neighbouring cell(s) in the current measurement report from high to low.

In one embodiment, the neighbouring cell(s) meeting the first condition in the current measurement report is changed compared with the neighbouring cell(s) meeting the first condition in the previous measurement report, including:
when the top N neighbouring cells in the first sorting are consistent with the top N neighbouring cells in the second sorting, the order of the top N neighbouring cells in the first sorting is changed compared with the order of the top N neighbouring cells in the second sorting.

In one embodiment, the processing module 110 is configured to perform one of the following:
when the signal quality value of the first neighbouring cell in the previous measurement report is less than or equal to the signal quality value of the first neighbouring cell in the current measurement report, determining not to report the current measurement report to the network device;
when the signal quality value of the first neighbouring cell in the previous measurement report is greater than the signal quality value of the first neighbouring cell in the current measurement report, determining to report the current measurement report to the network device;
when a difference between the signal quality value of the first neighbouring cell in the previous measurement report and the signal quality value of the first neighbouring cell in the current measurement report exceeds a preset threshold, determining to report the current measurement report to the network device.

In one embodiment, the previous measurement report is: a measurement report that the UE sends to the network device most recently based on the measurement identifier associated with the measurement report.

In one embodiment, the cell measurement result includes: a signal quality value of the neighbouring cell.

In one embodiment, the signal quality value of the neighbouring cell includes at least one of the following:
a measurement value of the Reference Signal Received Power (RSRP) of the neighbouring cell;
a measurement value of the reference signal received quality (RSRQ) of the neighbouring cell;
a measurement value of the signal to interference plus noise ratio (SINR) of the neighbouring cell.

In one embodiment, when the triggering of the UE's measurement reporting is related to the cell measurement result, the measurement reporting includes at least one of the following:
measurement reporting triggered based on meeting the entry condition of the measurement event;
measurement reporting triggered based on meeting the leaving condition of the measurement event.

In one embodiment, the measurement reporting triggered based on meeting the entry condition of the measurement event is: a first measurement reporting triggered based on meeting an entry condition of a measurement event.

In one embodiment, the measurement reporting triggered based on meeting the leaving condition of the measurement event is triggered by the UE when the leaving condition of the measurement event is met based on a leaving reporting indication configured by the network.

In one embodiment, the processing module 110 is configured to:
when the measurement event associated with the measurement identifier is a first measurement event, ignore, by the UE, the neighbouring cell list configuration corresponding to the measurement identifier; where the first measurement event is different from a second measurement event for a neighbouring cell.

Regarding the apparatuses in the above embodiments, the specific manner in which each module performs operations has been described in detail in the embodiments of the method, and will not be elaborated here.

FIG. 8 is a schematic structural diagram of a measurement reporting apparatus according to an exemplary embodiment. The measurement reporting apparatus is applied to a UE. As shown in FIG. 8, the apparatus 200 includes: a processing module 210; and the processing module 210 is configured to:
when a measurement event associated with a measurement identifier is a first measurement event, ignore, by the user equipment (UE), a neighbouring cell list configuration corresponding to the measurement identifier; where the first measurement event is different from a second measurement event for a neighbouring cell.

In one embodiment, the first measurement event includes at least one of the following:
a height-based measurement event;
a speed-based measurement event;
a location-based measurement event.

In one embodiment, the neighbouring cell list configuration includes at least one of the following:
a configuration of allowed cell list;
a configuration of excluded cell list.

In one embodiment, the processing module 210 is configured to:
when the measurement event associated with the measurement identifier is the first measurement event, not determine whether the UE has a configuration of use allowed cell list.

In one embodiment, the processing module 210 is configured to:
when a trigger condition for measurement reporting is met, determine, by the UE, whether to report a measurement report to the network device according to the measurement report.

Regarding the apparatuses in the above embodiments, the specific manner in which each module performs operations has been described in detail in the embodiments of the method, and will not be elaborated here.

An embodiment of the present disclosure provides a communication device, including a processor, a memory, and an executable program stored in the memory and capable of being run by the processor, where the processor executes the measurement reporting method provided by any of the aforementioned technical solutions when running the executable program.

The processor may include various types of storage media, which are non-transitory computer storage media that can continue to retain information stored thereon after the communication device loses power.

Here, the communication device includes: UE.

The processor may be connected to the memory via a bus or the like, and is configured to read an executable program stored in the memory, for example, at least one of the measurement reporting methods shown in FIG. 2 to FIG. 6.

FIG. 9 is a block diagram of a UE 800 according to an exemplary embodiment. For example, the UE 800 may be an unmanned drone, a mobile phone, a computer, a digital broadcast user device, a messaging device, a game console, a tablet device, a medical device, a fitness device, a personal digital assistant, etc.

Referring to FIG. 9, UE 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the UE 800, such as operations associated with display, phone calls, data communications, camera operations, and recording operations. The processing component 802 may include one or more processors 820 to execute instructions to generate all or part of the steps of the above-mentioned methods. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the UE 800. Examples of such data include instructions for any application or method operating on the UE 800, contact data, phone book data, messages, pictures, videos, etc. The memory 804 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 806 provides power to various components of the UE 800. The power component 806 may include a power management system, one or more power supplies, and other components associated with generating, managing, and distributing power for the UE 800.

The multimedia component 808 includes a screen that provides an output interface between the UE 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the UE 800 is in an operating mode, such as a shooting mode or a video mode, the front camera and/or the rear camera may receive external multimedia data. Each front camera and rear camera may be a fixed optical lens system or have a focal length and optical zoom capability.

The audio component 810 is configured to output and/or input audio signals. For example, the audio component 810 includes a microphone (MIC), and when the UE 800 is in an operation mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and peripheral interface modules, such as keyboards, click wheels, buttons, etc. These buttons may include but are not limited to: a home button, a volume button, a start button, and a lock button.

The sensor component 814 includes one or more sensors for providing various aspects of status assessment for the UE 800. For example, the sensor component 814 can detect the open/closed state of the device 800, the relative positioning of the components, such as the display and keypad of the UE800, and the sensor component 814 can also detect the position change of the UE 800 or a component of the UE 800, the presence or absence of contact between the user and the UE 800, the orientation or acceleration/deceleration of the UE 800, and the temperature change of the UE 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between UE 800 and other devices. UE 800 can access a wireless network based on a communication standard, such as WiFi, 4G or 5G, or a combination thereof. In an exemplary embodiment, the communication component 816 receives a broadcast signal or broadcast-related information from an external broadcast management system via a broadcast channel. In an exemplary embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, UE 800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above-mentioned measurement reporting methods.

In an exemplary embodiment, a non-transitory computer-readable storage medium including instructions is also provided, such as a memory 804 including instructions, and the instructions can be executed by the processor 820 of the UE 800 to generate the above methods. For example, the non-transitory computer-readable storage medium may be a ROM, a random access memory (RAM), a CD-ROM, a magnetic tape, a floppy disk, an optical data storage device, etc.

In the absence of contradiction, each step in a certain implementation or embodiment can be implemented as an independent embodiment, and the steps can be arbitrarily combined. For example, a solution after removing some steps in a certain implementation or embodiment can also be implemented as an independent embodiment, and the order of the steps in a certain implementation or embodiment can be arbitrarily exchanged. In addition, the optional methods or optional examples in a certain implementation or embodiment can be arbitrarily combined; in addition, the various implementations or embodiments can be arbitrarily combined. For example, some or all steps of different implementations or embodiments can be arbitrarily combined, and a certain implementation or embodiment can be arbitrarily combined with the optional methods or optional examples of other implementations or embodiments.

Those skilled in the art will readily appreciate other embodiments of the present disclosure after considering the specification and practicing the contents disclosed herein. The present disclosure is intended to cover any variations, uses, or adaptations of the present disclosure that follow the general principles of the present disclosure and include common knowledge or customary techniques in the art that are not disclosed in the present disclosure. The specification and embodiments are to be considered exemplary only, and the true scope and spirit of the present disclosure are indicated by the appending claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. A measurement reporting method, wherein the method comprises:
when a trigger condition for measurement reporting is met, determining, by a user equipment (UE), whether to report a measurement report to a network device according to the measurement report.

2. The method according to claim 1, wherein determining, by the user equipment (UE), whether to report the measurement report to the network device according to the measurement report, comprises:
determining, by the UE, whether to report a current measurement report to the network device based on a content of the current measurement report and a content of a previous measurement report.

3. The method according to claim 2, wherein determining, by the UE, whether to report the current measurement report to the network device based on the content of the current measurement report and the content of the previous measurement report, comprises at least one of:
determining, by the UE, whether to report the current measurement report to the network device based on a neighbouring cell in the current measurement report and a neighbouring cell in the previous measurement report;
determining, by the UE, whether to report the current measurement report to the network device based on a neighbouring cell meeting a first condition in the current measurement report and a neighbouring cell meeting the first condition in the previous measurement report;
determining, by the UE, whether to report the current measurement report to the network device based on a difference between a measurement result of a first neighbouring cell meeting a second condition in the previous measurement report and a measurement result of the first neighbouring cell in the current measurement report.

4. The method according to claim 3, wherein determining, by the UE, whether to report the current measurement report to the network device based on the neighbouring cell in the current measurement report and the neighbouring cell in the previous measurement report, comprises:
when the neighbouring cell in the current measurement report changes compared with the neighbouring cell in the previous measurement report, determining, by the UE, to report the current measurement report to the network device;
or,
when the neighbouring cell in the current measurement report is unchanged compared with the previous measurement report, determining, by the UE, not to report the current measurement report to the network device.

5. The method according to claim 4, wherein the neighbouring cell in the current measurement report changing compared with the previous measurement report, comprises:
compared with the neighbouring cell in the previous measurement report, one of addition, replacement, and missing or a combination of more than one of addition, replacement, and missing occurring in the neighbouring cell in the current measurement report.

6. The method according to any one of claims 3 to 5, wherein determining, by the UE, whether to report the current measurement report to the network device based on the neighbouring cell meeting the first condition in the current measurement report and the neighbouring cell meeting the first condition in the previous measurement report, comprises:
when the neighbouring cell meeting the first condition in the current measurement report changes compared with the neighbouring cell meeting the first condition in the previous measurement report, determining, by the UE, to report the current measurement report to the network device;
or,
when the neighbouring cell meeting the first condition in the current measurement report is unchanged compared with the neighbouring cell meeting the first condition in the previous measurement report, determining, by the UE, not to report the current measurement report to the network device.

7. The method according to claim 6, wherein
the neighbouring cell meeting the first condition in the previous measurement report comprises:
top N neighbouring cell(s) in a first sorting of neighbouring cells in the previous measurement report; wherein N is a positive integer greater than or equal to 1; wherein the first sorting comprises: an order of signal quality values of the neighbouring cells in the previous measurement report from high to low;
the neighbouring cell meeting the first condition in the current measurement report comprises:
top N neighbouring cell(s) in a second sorting of neighbouring cells in the current measurement report; wherein the second sorting comprises: an order of signal quality values of the neighbouring cells in the current measurement report from high to low.

8. The method according to claim 7, wherein the neighbouring cell meeting the first condition in the current measurement report changing compared with the neighbouring cell meeting the first condition in the previous measurement report, comprises:
when the top N neighbouring cell(s) in the first sorting are consistent with the top N neighbouring cell in the top N neighbouring cell(s) in the second sorting, the order of the top N neighbouring cell(s) in the first sorting changing compared with the order of the top N neighbouring cell(s) in the second sorting.

9. The method according to any one of claims 3 to 8, wherein the first neighbouring cell meeting the second condition in the previous measurement report is:
an M-th neighbouring cell in a first sorting of the signal quality value of the neighbouring cell in the previous measurement report from high to low; wherein M is a positive integer greater than or equal to 1.

10. The method according to claim 9, wherein determining, by the UE, whether to report the current measurement report to the network device based on the difference between the measurement result of the first neighbouring cell meeting the second condition in the previous measurement report and the measurement result of the first neighbouring cell in the current measurement report, comprises one of:
when the signal quality value of the first neighbouring cell in the previous measurement report is less than or equal to the signal quality value of the first neighbouring cell in the current measurement report, determining not to report the current measurement report to the network device;
when the signal quality value of the first neighbouring cell in the previous measurement report is greater than the signal quality value of the first neighbouring cell in the current measurement report, determining to report the current measurement report to the network device;
when the difference between the signal quality value of the first neighbouring cell in the previous measurement report and the signal quality value of the first neighbouring cell in the current measurement report exceeds a preset threshold, determining to report the current measurement report to the network device.

11. The method according to any one of claims 2 to 10, wherein the previous measurement report is: a measurement report that the UE most recently sent to the network device based on a measurement identifier associated with the measurement report.

12. The method according to any one of claims 1 to 11, wherein the measurement report comprises: a signal quality value of a neighbouring cell.

13. The method according to claim 12, wherein the signal quality value of the neighbouring cell comprises at least one of:
a measurement value of a reference signal received power (RSRP) of the neighbouring cell;
a measurement value of a reference signal received quality (RSRQ) of the neighbouring cell;
a measurement value of a signal to interference plus noise ratio (SINR) of the neighbouring cell.

14. The method according to claim 12 or 13, wherein the measurement reporting comprises at least one of:
measurement reporting triggered based on meeting an entry condition of a measurement event;
measurement reporting triggered based on meeting a leaving condition of a measurement event.

15. The method according to claim 14, wherein the measurement reporting triggered based on meeting the entry condition of the measurement event is: a first measurement reporting triggered based on meeting the entry condition of the measurement event.

16. The method according to claim 14 or 15, wherein the measurement reporting triggered based on meeting the leaving condition of the measurement event is triggered by the UE when the leaving condition of the measurement event is met based on a leaving reporting indication configured by a network.

17. A measurement reporting method, wherein the method comprises:
when a measurement event associated with a measurement identifier is a first measurement event, ignoring, by a user equipment (UE), a neighbouring cell list configuration corresponding to the measurement identifier; wherein the first measurement event is different from a second measurement event for a neighbouring cell.

18. The method according to claim 17, wherein the first measurement event comprises at least one of:
a height-based measurement event;
a speed-based measurement event;
a location-based measurement event.

19. The method according to claim 17 or 18, wherein the neighbouring cell list configuration comprises at least one of:
a configuration of allowed cell list;
a configuration of excluded cell list.

20. The method according to any one of claims 17 to 19, wherein the method further comprises:
when the measurement event associated with the measurement identifier is the first measurement event, not determining whether the UE has a configuration of use allowed cell list.

21. A measurement reporting apparatus, wherein the apparatus comprises:
a processing module, configured to, when a trigger condition for measurement report is met, determine, by a user equipment (UE), whether to report a measurement report to a network device according to the measurement report.

22. A measurement reporting apparatus, wherein the apparatus comprises:
a processing module, configured to, when a measurement event associated with a measurement identifier is a first measurement event, cause a user equipment (UE) to ignore a neighbouring cell list configuration corresponding to the measurement identifier; wherein the first measurement event is different from a second measurement event for a neighbouring cell.

23. A communication device, comprising a processor, a memory, and an executable program stored in the memory and capable of being run by the processor, wherein the processor executes the measurement reporting method according to any one of claims 1 to 16 or claims 17 to 20 when running the executable program.

24. A computer storage medium, wherein the computer storage medium stores an executable program; after the executable program is executed by a processor, the measurement reporting method according to any one of claims 1 to 16 or claims 17 to 20 can be implemented.
